# EUROPÄISCHE PATENTSCHRIFT

(11) **EP 3 623 084 B1**
(45) Veröffentlichungstag und Bekanntmachung des Hinweises auf die Patenterteilung: **23.02.2022**
(21) Anmeldenummer: 18194543.7
(22) Anmeldetag: 14.09.2018
(51) Int. Cl.: B23B 31/107, B23B 31/00

(54) **ZERSPANUNGSWERKZEUG UND WERKZEUGSYSTEM**
MACHINING TOOL AND TOOL SYSTEM
OUTIL D'ENLÈVEMENT DE COPEAUX ET SYSTÈME D'OUTIL

(43) Veröffentlichungstag der Anmeldung: 18.03.2020
(73) Patentinhaber: Ceratizit Austria Gesellschaft m.b.H., 6600 Reutte (AT); KOMET Deutschland GmbH, 74354 Besigheim (DE)
(72) Erfinder: Bierl, Wolfgang, 74354 Besigheim (DE); Mayer, Manuel, 74354 Besigheim (DE); Spors, Benno, 74354 Besigheim (DE); Schneider, Rico, 74354 Besigheim (DE); Venturini, Remus, 6600 Reutte (AT); Schleinkofer, Uwe, 6600 Reutte (AT); Praznik, Patrick, 6600 Reutte (AT)
(74) Vertreter: Ciesla, Dirk

(56) Entgegenhaltungen:
- EP-A1- 1 275 468
- EP-A2- 1 226 894
- DE-A1- 4 117 765
- US-A1- 2013 127 123

## Beschreibung

Die vorliegende Erfindung betrifft ein Werkzeugsystem nach dem Oberbegriff von Anspruch 1 , wie in der EP 1 275 468 A1 beschrieben EP 1 275 468 A1 beschreibt einen Werkzeughalter, bei dem eine Mehrzahl von elastischen Eingriffsstücken an dem Außenumfangsabschnitt eines Schaftes an einer Mehrzahl von Positionen entlang der axialen Mitte angeordnet ist. Die elastischen Eingriffsstücke können an der inneren Oberfläche eines sich verjüngenden Loches anliegen und leicht in der radialen Richtung elastisch deformiert werden.

EP 1 226 894 A2 beschreibt ein Zerspanungswerkzeug mit einem Aufnahmeabschnitt, der einen als Hohlzapfen ausgebildeten, elastisch aufweitbaren Aufweitungsabschnitt mit einem in Richtung des zweiten Endes offenen inneren Hohlraum aufweist. Der Aufweitungsabschnitt ist in einer konischen Bohrung einer als Spannschaft bezeichneten Werkzeugaufnahme aufgenommen und wird durch einen Spreizmechanismus, der in den inneren Hohlraum des Hohlzapfens eingeführt ist, radial aufgeweitet, um eine Flächenpressung zwischen der konischen Außenumfangsfläche des Aufweitungsabschnitts und der konischen Bohrung der Werkzeugaufnahme zu bewirken. Die Außenumfangsfläche des Aufweitungsabschnitts ist als eine durchgehend umlaufende konische Klemmfläche ausgebildet, in der zwei gegenüberliegende kreisförmige Durchbrüche zum Einführen eines Betätigungsschlüssels für den Spreizmechanismus ausgebildet sind. Der Spreizmechanismus drückt in einer Richtung quer zu einer Längsachse des Zerspanungswerkzeugs an bezüglich der Längsachse gegenüberliegenden Bereichen gegen die Wand des Hohlzapfens nach radial außen und bewirkt in dieser Weise eine elastische Deformation des Hohlzapfens. Es hat sich gezeigt, dass bei dieser Realisierung im Bereich dieser relativ kleinen Umfangsanlageflächen sehr hohe Kräfte wirken, die mit der Gefahr eines hohen lokalen Verschleißes und gegebenenfalls einer lokalen Verschweißung in diesem Bereich einhergehen. Bei einer alternativen zylindrischen Ausbildung des Hohlzapfens und der Bohrung würden nur relativ kleine, nahezu linienförmige Flächenbereiche der Klemmfläche als Umfangsanlageflächen wirken, die an der Flächenpressung zwischen dem Außenumfang des Hohlzapfens und der Bohrung der Werkzeugaufnahme teilnehmen.

Es ist Aufgabe der vorliegenden Erfindung, ein verbessertes Werkzeugsystem bereitzustellen, bei dem das Auftreten eines lokalen Verschleißes und das Risiko eines lokalen Verschweißens zuverlässig vermindert sind.

Die Aufgabe wird durch ein Werkzeugsystem nach Anspruch 1 gelöst. Vorteilhafte Weiterbildungen sind in den abhängigen Ansprüchen angegeben.

Unter rückspringenden Vertiefungen sind dabei vorliegend Strukturen zu verstehen, die gegenüber den Klemmflächen in Radialrichtung nach innen versetzt sind, sich jedoch nicht in Form von Längsschlitzen bis zu dem inneren Hohlraum erstrecken. Zusätzlich zu den rückspringenden Vertiefungen können aber noch Durchbrüche für z.B. Betätigungsschlüssel wie im einleitend beschriebenen Stand der Technik vorgesehen sein. Die einstückige Ausbildung des Schaftabschnittes und des Aufnahmeabschnittes bedeutet, dass diese zusammenhängend monolithisch ausgebildet sind. Der Schaftabschnitt und der Aufnahmeabschnitt können dabei aus demselben Material gefertigt sein, können aber z.B. aus stoffschlüssig gefügten unterschiedlichen Materialien gebildet sein. Durch das Vorsehen der Mehrzahl von separaten Klemmflächen, die entlang der Oberfläche des gemeinsamen Zylinders oder Konus verlaufen und durch die rückspringenden Vertiefungen voneinander getrennt sind, werden eine gezieltere Verteilung der Umfangsanlageflächen, die tatsächlich an der Flächenpressung zwischen dem Außenumfang des Hohlzapfens und der Bohrung der Werkzeugaufnahme teilnehmen, über den Umfang erreicht. In dieser Weise werden die wirkenden Klemmkräfte besser über die Außenumfangsfläche des Aufweitungsabschnitts verteilt und es werden sehr hohe lokale Flächenpressungen zuverlässig vermieden, sodass hoher lokaler Verschleiß und lokale Verschweißungen unterbunden werden.

Gemäß einer Weiterbildung sind eine erste rückspringende Vertiefung, die Klemmflächen in Umfangsrichtung voneinander trennt, und eine zweite rückspringende Vertiefung, die Klemmflächen in Umfangsrichtung voneinander trennt, auf zueinander gegenüberliegenden Seiten der Längsachse ausgebildet. In diesem Fall können die erste und die zweite rückspringende Vertiefung an Positionen angeordnet werden, an denen ein Spreizmechanismus in einer Richtung quer zu der Längsachse des Zerspanungswerkzeugs an bezüglich der Längsachse gegenüberliegenden Bereichen gegen die Wand des Hohlzapfens nach radial außen drückt, wo besonders die Gefahr von sehr hohen lokalen wirkenden Kräften und eines daraus resultierenden erhöhten lokalen Verschleißes besteht. Ferner ermöglicht insbesondere diese Ausbildung eine gleichmäßigere Verteilung der Klemmkräfte über die Außenumfangsfläche des Aufweitungsabschnitts. Unter gegenüberliegenden Seiten bezüglich der Längsachse wird vorliegend nicht nur eine vollkommen symmetrische Anordnung um genau 180° zueinander versetzt verstanden, sondern es ist auch ein leicht abweichender Winkelbereich möglich.

Gemäß einer Weiterbildung sind die Klemmflächen auch in Axialrichtung durch rückspringende Vertiefungen voneinander getrennt. Neben der Trennung der Klemmflächen in Umfangsrichtung ist somit auch eine Trennung der Klemmflächen in der Axialrichtung realisiert, wodurch eine gleichmäßigere Verteilung der wirkenden Umfangsanlageflächen auch in der axialen Richtung erzielt wird.

Gemäß einer Weiterbildung sind zumindest eine erste Art von rückspringenden Vertiefungen und eine von der ersten Art verschiedene zweite Art von rückspringenden Vertiefungen ausgebildet. In diesem Fall können die wirkenden Klemmkräfte besonders gezielt über die Außenumfangsfläche des Aufweitungsabschnitts verteilt werden. Gemäß einer Ausgestaltung unterscheiden sich die erste Art von rückspringenden Vertiefungen und die zweite Art von rückspringenden Vertiefungen in ihrer axialen Erstreckung bezüglich der Längsachse voneinander. Die erste Art von rückspringenden Vertiefungen und die zweite Art von rückspringenden Vertiefungen können sich auch in ihrer Tiefe und/oder Flächenerstreckung in der Außenumfangsfläche voneinander unterscheiden.

Wenn der Aufweitungsabschnitt als ungeschlitzter Hohlzapfen ausgebildet ist, kann das Auftreten nachteiliger hoher lokaler Flächenpressungen besonders zuverlässig vermieden werden. Unter einer Ausbildung als ungeschlitzter Hohlzapfen wird dabei verstanden, dass der Hohlzapfen keine sich von der Außenumfangsfläche bis zu dem inneren Hohlraum durchgehende Längsschlitze in seiner Wand aufweist. Kleine Durchbrüche zum Einführen eines Betätigungsschlüssels für den Spreizmechanismus können aber vorgesehen sein.

Gemäß einer Weiterbildung verlaufen die Klemmflächen entlang der Oberfläche eines gemeinsamen zu der Längsachse koaxialen Zylinders. In diesem Fall können die auftretenden lokalen Spannungen in dem Hohlzapfen besonders gezielt durch die Anordnung der rückspringenden Vertiefungen beeinflusst werden.

Gemäß einer Weiterbildung ist an dem Schaftabschnitt zumindest ein Sitz zur Aufnahme eines auswechselbaren Schneideinsatzes ausgebildet. Es ist insbesondere aber auch möglich, eine Mehrzahl von solchen Sitzen vorzusehen, die z.B. zur Aufnahme identischer oder voneinander verschiedener Schneideinsätze ausgebildet sein können. Der Zerspanungsabschnitt kann dabei z.B. insbesondere zur Durchführung einer Bohrbearbeitung oder einer Bohrungsnachbearbeitung ausgebildet sein. Der Schneideinsatz kann z.B. über eine Schraub- oder Klemmverbindung an dem Sitz befestigt werden oder aber z.B. auch durch eine stoffschlüssige Verbindung, z.B. durch Löten.

Das Werkzeugsystem weist das Zerspanungswerkzeug und eine Werkzeugaufnahme auf, die eine Bohrung zur Aufnahme des Hohlzapfens des Aufnahmeabschnitts, eine Axialanlagefläche zur Anlage des vorspringenden Bundes und einen in den Hohlraum des Aufweitungsabschnitts eingreifenden Spreizmechanismus zur radialen Aufweitung des Aufweitungsabschnitts aufweist.

Der Spreizmechanismus drückt in einer ersten Richtung an bezüglich der Längsachse gegenüberliegenden Bereichen gegen die Wand des Aufweitungsabschnitts nach radial außen und in diesen gegenüberliegenden Bereichen sind jeweils rückspringende Vertiefungen ausgebildet, die Klemmflächen voneinander in Umfangsrichtung trennen. In dieser Weise wird besonders zuverlässig eine gleichmäßigere Verteilung der Klemmkräfte über die Außenumfangsfläche des Aufweitungsabschnitts erreicht und übermäßig hohe lokale Flächenpressungen werden zuverlässig unterbunden.

Gemäß einer Weiterbildung drückt der Spreizmechanismus in einer ersten Richtung an bezüglich der Längsachse gegenüberliegenden Bereichen gegen die Wand des Aufweitungsabschnitts nach radial außen und die rückspringenden Vertiefungen sind derart ungleichmäßig über den Umfang des Aufweitungsabschnitts verteilt, dass die resultierende Flächenpressung zwischen den Klemmflächen und der Bohrung der Werkzeugaufnahme gegenüber einer in Umfangsrichtung ungeteilten Klemmfläche gleichmäßiger über den Umfang des Aufweitungsabschnitts verteilt ist. In diesem Fall können das Auftreten eines lokalen hohen Verschleißes und das Risiko von lokalen Verschweißungen zuverlässig verringert werden.

Gemäß einer Weiterbildung ist der Spreizmechanismus auch für einen axialen Einzug des vorspringenden Bundes gegen die Axialanlagefläche ausgebildet. In diesem Fall wird eine besonders vorteilhafte Positionierung und Fixierung erzielt.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Explosionsdarstellung eines Werkzeugsystems gemäß einer Ausführungsform;
- Fig. 2:: eine schematische Explosionsdarstellung des Werkzeugsystems in einer ersten Blickrichtung senkrecht zu einer Längsachse des Zerspanungswerkzeugs;
- Fig. 3:: eine schematische Explosionsdarstellung des Werkzeugsystems in einer zweiten Blickrichtung senkrecht zu der Längsachse des Zerspanungswerkzeugs;
- Fig. 4:: eine schematische Schnittdarstellung entlang der Linie A-A in Fig. 3 durch das Zerspanungswerkzeug und entlang der Linie B-B in Fig. 3 durch die Wekzeugaufnahme;
- Fig. 5:: eine schematische Darstellung des Werkzeugsystems im zusammengesetzten Zustand in einer Fig. 3 entsprechenden Blickrichtung senkrecht zur Längsachse;
- Fig. 6:: eine schematische Schnittdarstellung des Werkzeugsystems entlang der Linie C-C in Fig. 5;
- Fig. 7:: eine vergrößerte Detaildarstellung im Bereich eines Aufnahmeabschnittes des Zerspanungswerkzeugs und einer Bohrung zur Aufnahme des Hohlzapfens des Aufnahmeabschnitts sowie eines Spreizmechanismus der Werkzeugaufnahme in einem ungespannten Zustand des Spreizmechanismus;
- Fig. 8:: eine Fig. 7 entsprechende Detaildarstellung im gespannten Zustand des Spreizmechanismus;
- Fig. 9a:: eine Detaildarstellung des Aufnahmeabschnitts in einer ersten Richtung senkrecht zur Längsachse mit hervorgehobenen Klemmflächen;
- Fig. 9b:: eine Detaildarstellung des Aufnahmeabschnitts in einer zweiten Richtung senkrecht Längsachse und senkrecht zur Richtung von Fig. 9 mit hervorgehobenen Klemmflächen;
- Fig. 9c:: eine Detaildarstellung des Aufnahmeabschnitts in einer zu Fig. 9a entgegengesetzten Richtung senkrecht zur Längsachse mit hervorgehobenen Klemmflächen;
- Fig. 9d:: eine Detaildarstellung des Aufnahmeabschnitts in einer zu Fig. 9b entgegengesetzten Richtung senkrecht zur Längsachse mit hervorgehobenen Klemmflächen;
- Fig. 10:: eine schematische Darstellung des Aufnahmeabschnitts des Zerspanungswerkzeugs in einer Blickrichtung entlang der Längsachse zur Verdeutlichung der wirkenden Axialanlageflächen an dem vorspringenden Bund des Zerspanungswerkzeugs;
- Fig. 11:: eine schematische Darstellung des Zerspanungswerkzeugs in einer Blickrichtung senkrecht zur Längsachse zur Verdeutlichung der an der Flächenpressung teilnehmenden Umfangsanlageflächen; und
- Fig. 12:: eine vergrößerte Detaildarstellung von Fig. 11 zur Verdeutlichung der an der Flächenpressung teilnehmenden Umfangsanlageflächen.

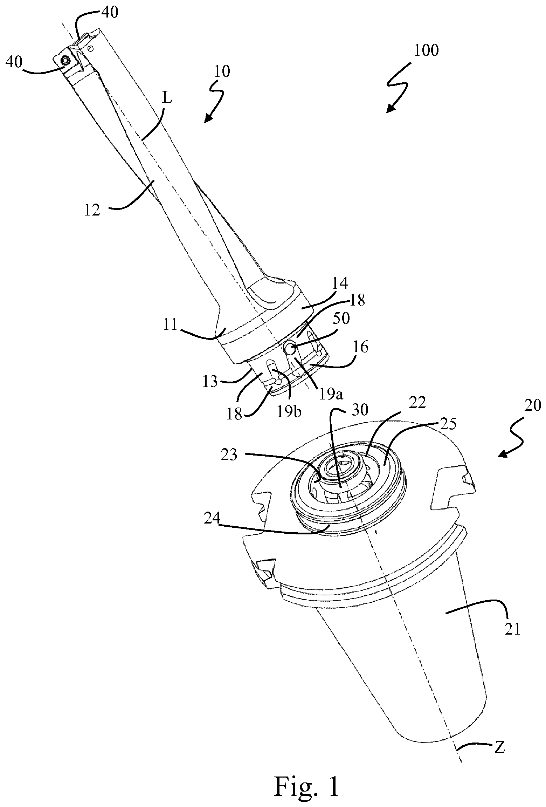

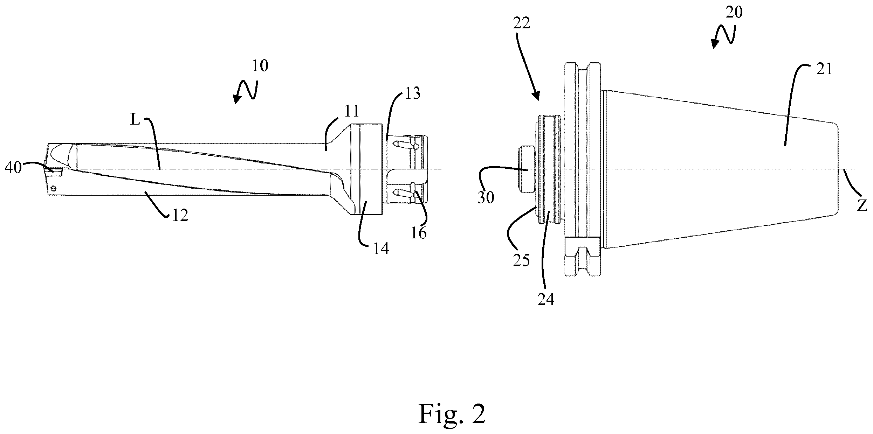

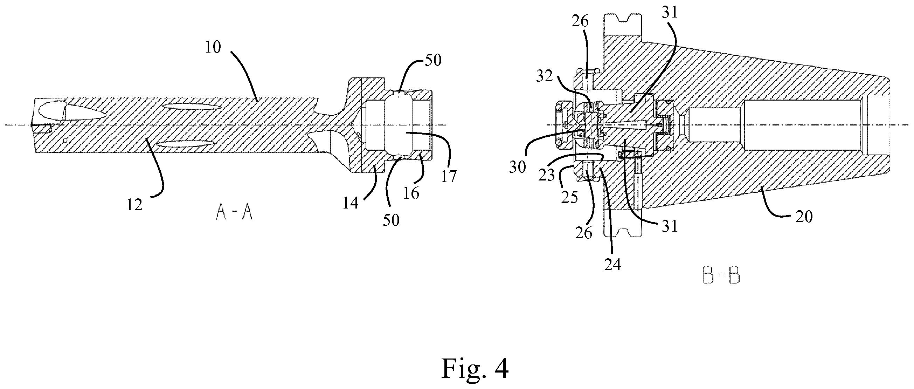

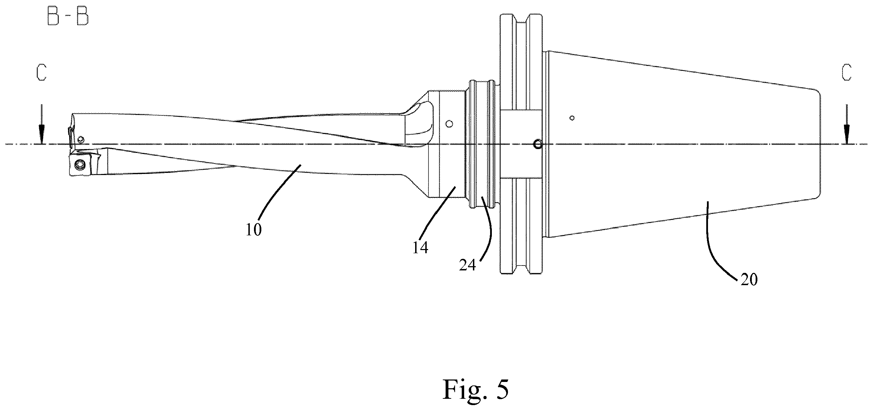

Eine Ausführungsform des Zerspanungswerkzeugs 10 und des Werkzeugsystems 100 aufweisend das Zerspanungswerkzeug 10 und eine Werkzeugaufnahme 20 werden im Folgenden unter Bezugnahme auf die Fig. 1 bis Fig. 12 eingehender beschrieben.

Die in Fig. 1 schematisch dargestellte Werkzeugaufnahme 20 erstreckt sich entlang einer Achse Z und weist ein erstes Ende 21 zur Verbindung mit einer Bearbeitungsmaschine und ein zweites Ende 22 zur Verbindung mit dem Zerspanungswerkzeug 10 auf. Bei dem konkret dargestellten Beispiel ist das erste Ende 21 als ein Steilkegel ausgebildet. Es ist jedoch zu beachten, dass das erste Ende 21 auch eine andere übliche Ausgestaltung zur Verbindung mit einer Bearbeitungsmaschine aufweisen kann, insbesondere eine der in diesem technischen Bereich üblichen und genormten Ausgestaltungen. Das für die Verbindung mit dem Zerspanungswerkzeug 10 ausgebildete zweite Ende 22 weist eine stirnseitige Bohrung 23 auf, die bei dem dargestellten Beispiel als eine zylindrische Bohrung ausgeführt ist, was bevorzugt ist. Es ist jedoch zu beachten, dass die Bohrung 23 in einer alternativen Realisierung z.B. auch als eine konische Bohrung ausgeführt sein kann. Die Bohrung 23 ist von einem ringförmig umlaufenden Vorsprung 24 umgeben, an dessen Stirnseite eine ringförmig umlaufende ebene Axialanlagefläche 25 ausgebildet ist. Die Bohrung 23 und die Axialanlagefläche 25 sind konzentrisch zu der Achse Z angeordnet.

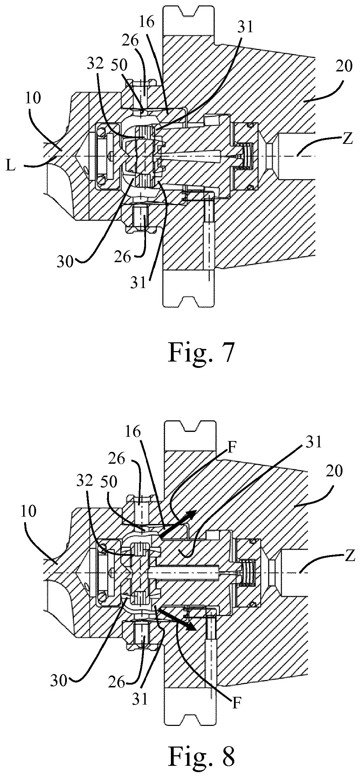

In der Bohrung 23 der Werkzeugaufnahme 20 ist ein Spreizmechanismus 30 angeordnet, der dazu ausgebildet ist, das Zerspanungswerkzeug 10 fest mit der Werkzeugaufnahme 20 zu verbinden, wie im Folgenden noch eingehender beschrieben wird. Der Spreizmechanismus 30 weist zwei gegenüberliegende Spannelemente 31 auf, die mittels eines nicht dargestellten Betätigungsschlüssels in eine in Fig. 7 dargestellte entspannte Stellung und in eine in Fig. 8 dargestellte gespannte Stellung bewegt werden können. Der Spreizmechanismus 30 kann dabei in an sich bekannter Weise ausgebildet sein, wie es in dem einleitend diskutierten Stand der Technik EP 1 226 894 A2 detailliert beschrieben ist. Wie in den Fig. 7 und Fig. 8 zu sehen ist, sind in dem umlaufenden Vorsprung 24 der Werkzeugaufnahme 20 seitliche Durchbrechungen 26 vorgesehen, durch die hindurch mit dem Betätigungsschlüssel für den Spreizmechanismus 30 auf den Betätigungsmechanismus 32 für den Spreizmechanismus 30 zugegriffen werden kann. Der Betätigungsmechanismus 32 kann dabei insbesondere durch eine Differentialschraube gebildet sein. Wenn der Spreizmechanismus 30 über den Betätigungsmechanismus 32 in die in Fig. 8 dargestellte gespannte Stellung gebracht wird, werden die sich gegenüberliegenden Spannelemente 31 in einer Richtung senkrecht zur Achse Z der Werkzeugaufnahme 20 nach radial außen bewegt, wie im Weiteren noch eingehender beschrieben wird.

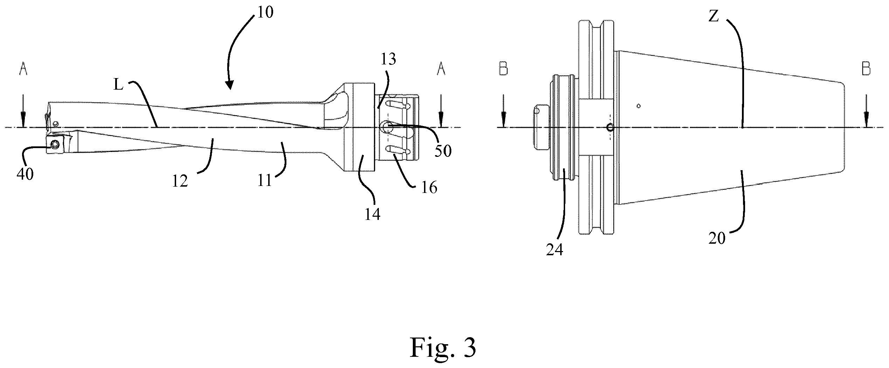

Zunächst wird aber das Zerspanungswerkzeug 10 eingehender beschrieben. Bei der konkret dargestellten Ausführungsform ist das Zerspanungswerkzeug 10 als ein Bohrer ausgebildet, es ist jedoch zu beachten, dass das Zerspanungswerkzeug 10 auch für andere Bearbeitungsverfahren ausgebildet sein kann. Das Zerspanungswerkzeug 10 hat einen Grundkörper 11, der sich entlang einer Längsachse L erstreckt, wie insbesondere in den Fig. 1 und Fig. 3 zu sehen ist. Der Grundkörper 11 hat an einem ersten Ende einen als Zerspanungsabschnitt ausgebildeten Schaftabschnitt 12 und an dem anderen, zweiten Ende einen Aufnahmeabschnitt 13. Der Schaftabschnitt 12 und der Aufnahmeabschnitt 13 sind einstückig bzw. monolithisch ausgebildet. Der Grundkörper 11 kann insbesondere z.B. aus einem Werkzeugstahl, einem Hartmetall (cemented carbide) oder einem Wolframschwermetall wie Densimet^{®} gebildet sein. Bei der konkret dargestellten Ausführungsform ist der Schaftabschnitt 12 mit einer Mehrzahl von spiralisierten Spannuten zur Abfuhr von Spänen versehen und weist an dem ersten Ende eine Mehrzahl von Sitzen auf, an denen auswechselbare Schneideinsätze 40 befestigt sind. Bei dem konkret dargestellten Bohrwerkzeug sind zwei solche Sitze zur Aufnahme von auswechselbaren Schneideinsätzen 40 vorgesehen, die um ca. 180° versetzt zueinander und an unterschiedlichen radialen Positionen bezüglich der Längsachse L angeordnet sind. Es ist jedoch zu beachten, dass je nach der gewünschten Zerspanungsbearbeitung auch andere Anordnungen möglich sind. Obwohl in dem konkret in den Figuren gezeigten Beispiel die Schneideinsätze 40 über Befestigungsschrauben an den Sitzen befestigt sind, sind auch andere Ausgestaltungen möglich, bei denen die Schneideinsätze in anderer Weise befestigt sind, z.B. über Klemmen oder über eine stoffschlüssige Verbindung wie z.B. Löten.

Im Folgenden wird der Aufnahmeabschnitt 13 des Zerspanungswerkzeugs 10 eingehender beschrieben.

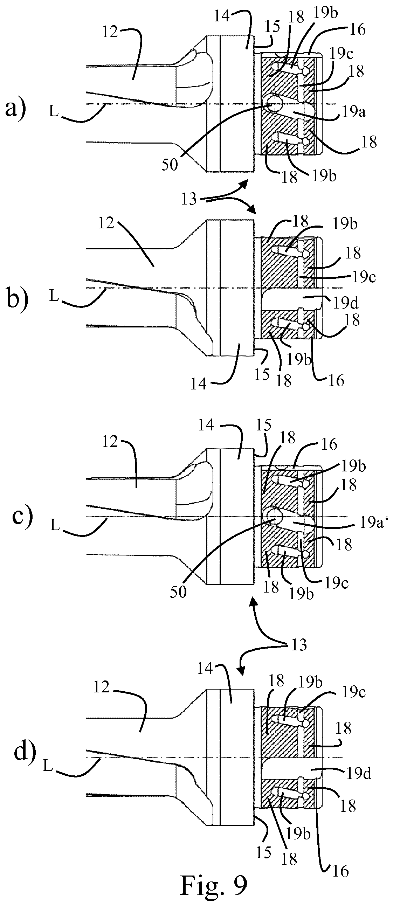

Wie insbesondere in den Detaildarstellungen der Fig. 9 a) bis Fig. 9 d) zu sehen ist, weist der Aufnahmeabschnitt 13 einen in Radialrichtung bezüglich der Längsachse L vorspringenden Bund 14 auf. Der vorspringende Bund 14 bildet einen Axialanschlag 15, der sich quer zur Längsachse L erstreckt. Der Axialanschlag 15 ist dazu ausgebildet, im zusammengesetzten Zustand des Werkzeugsystems 100 an der Axialanlagefläche 25 der Werkzeugaufnahme 20 anzuliegend. Bei dem konkret dargestellten Beispiel erstreckt sich der Axialanschlag 15 insbesondere senkrecht zur Längsachse L.

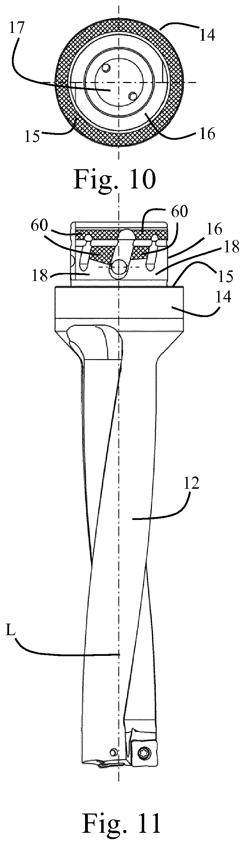

Der Aufnahmeabschnitt 13 weist ferner einen als Hohlzapfen ausgebildeten, elastisch aufweitbaren Aufweitungsabschnitt 16 auf, der sich bis zu dem zweiten Ende des Grundkörpers 11 erstreckt und einen in Richtung des zweiten Endes offenen inneren Hohlraum 17 aufweist. Wie insbesondere in Fig. 10 zu sehen ist, weist der Aufweitungsabschnitt 16 eine in Umfangsrichtung geschlossene ringförmige Stirnseite auf, sodass die Wand des Hohlzapfens an der Stirnseite nicht von Durchbrechungen geschwächt ist. Bei dem konkret dargestellten Beispiel hat der als Hohlzapfen ausgebildete Aufweitungsabschnitt 16 eine im Wesentlichen zylindrische Außenkontur, die an die im Wesentlichen zylindrische stirnseitige Bohrung 23 der Werkzeugaufnahme 20 angepasst ist. In dem Fall einer konischen Ausbildung der stirnseitigen Bohrung 23 der Werkzeugaufnahme 20 wäre auch die Außenkontur des Aufweitungsabschnitts 16 im Wesentlichen konisch auszuführen.

Die Außenumfangsfläche des Aufweitungsabschnitts 16 weist eine Mehrzahl von separaten, also getrennt voneinander ausgebildeten Klemmflächen 18 auf. Bei dem dargestellten Beispiel eines im Wesentlichen zylinderförmigen Hohlzapfens erstrecken sich die Klemmflächen 18 entlang der Oberfläche eines gemeinsamen zu der Längsachse L koaxialen Zylinders. Bei einer alternativen konischen Grundform des Hohlzapfens, würden sich die Klemmflächen 18 entlang der Oberfläche eines gemeinsamen Konus erstrecken. Die Klemmflächen 18 sind in Umfangsrichtung durch rückspringende Vertiefungen 19a, 19a', 19b, 19c, 19d voneinander getrennt, wie insbesondere in den Fig. 9 a) bis Fig. 9 d) zu sehen ist, in denen die Klemmflächen 18 zur Verdeutlichung schraffiert dargestellt sind. Die Klemmflächen 18 können insbesondere als sehr genau geschliffene Flächen ausgebildet sein und die zwischen den Klemmflächen 18 eingebrachten rückspringenden Vertiefungen können z.B. eingefräst sein. Bei dem konkret dargestellten Ausführungsbeispiel sind die Klemmflächen 18 nicht nur in Umfangsrichtung voneinander getrennt, sondern auch durch eine im Wesentlichen ringförmig um die Längsachse L umlaufende rückspringende Vertiefung 19c in Axialrichtung voneinander getrennt.

Wie in den Fig. 9a und Fig. 9c zu sehen ist, die Ansichten von zueinander entgegengesetzten Seiten des Aufweitungsabschnitts 16 sind, sind eine erste rückspringende Vertiefung 19a (im Bereich der Längsachse L in Fig. 9a) und eine zweite rückspringende Vertiefung 19a' (im Bereich der Längsachse L in Fig. 9c), die jeweils Klemmflächen 18 in Umfangsrichtung voneinander trennen, auf zueinander gegenüberliegenden Seiten der Längsachse L ausgebildet. Mit anderen Worten sind diese jeweils Klemmflächen 18 in Umfangsrichtung voneinander trennenden rückspringenden Vertiefungen 19a und 19a' um etwa 180° versetzt zueinander ausgebildet, wobei jedoch auch Abweichungen über einen gewissen Winkelbereich möglich sind. Diese rückspringenden Vertiefungen 19a, 19a' erstrecken sich jeweils über die gesamte Länge des mit Klemmflächen 18 versehenen Bereichs des Aufweitungsabschnitts 16 und unterteilen somit die Klemmflächen 18 in Umfangsrichtung. Diese erste Art von rückspringenden Vertiefungen 19a, 19a' unterscheidet sich von einer zweiten Art von rückspringenden Vertiefungen 19b, die sich jeweils nicht über die gesamte Länge des mit Klemmflächen 18 versehenen Bereichs des Aufweitungsabschnitts 16 erstrecken. Eine in den Fig. 9 b) und 9 d) zu sehende dritte Art von rückspringenden Vertiefungen 19d erstreckt sich ebenfalls über die gesamte Länge des mit Klemmflächen 18 versehenen Bereichs des Aufweitungsabschnitts 16 und ist zusätzlich als Drehmomentmitnahme ausgebildet, die eine Drehmomentübertragung von der Werkzeugaufnahme 20 auf das Zerspanungswerkzeug 10 bewirkt.

Die erste Art von rückspringenden Vertiefungen 19a, 19a' und die zweite Art von rückspringenden Vertiefungen 19b unterscheiden sich ferner noch in ihrer Flächenerstreckung in der Außenumfangsfläche voneinander, wie insbesondere z.B. in Fig. 9a zu erkennen ist. Die verschiedenen rückspringenden Vertiefungen können sich ferner auch in ihrer Tiefe voneinander unterscheiden, d.h. darin, wie tief sie sich in das Material des Hohlzapfens erstrecken.

Wie in den Fig. 9 a) und Fig. 9c) weiter zu erkennen ist, sind in dem Aufweitungsabschnitt 16 ferner zwei gegenüberliegende kreisförmige Durchbrüche 50 ausgebildet, die sich durch die Wand des Aufweitungsabschnitts 16 hindurch erstrecken, um einen Zugriff zu dem Betätigungsmechanismus 32 des Spreizmechanismus 30 mit einem Betätigungsschlüssel zu ermöglichen. Die Durchbrüche 50 sind bei dem Ausführungsbeispiel im Bereich der ersten Art von rückspringenden Vertiefungen 19a, 19a' ausgebildet. Insgesamt ist der Aufweitungsabschnitt 16 aber als ein ungeschlitzter Hohlzapfen ausgebildet.

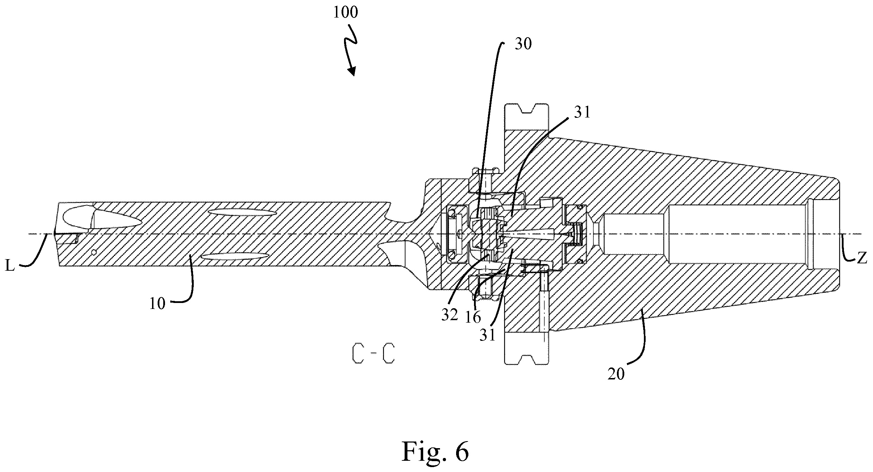

Im Folgenden wird noch die Wechselwirkung zwischen dem Zerspanungswerkzeug 10 und der Werkzeugaufnahme 20 im zusammengesetzten Zustand des Werkzeugsystems 100 beschrieben. Der als Hohlzapfen ausgebildete Aufweitungsabschnitt 16 des Zerspanungswerkzeugs 10 wird in die Bohrung 23 der Werkzeugaufnahme 20 eingeführt, bis der durch den vorspringenden Bund 14 gebildete Axialanschlag 15 an der Axialanlagefläche 25 des umlaufenden Vorsprungs 24 anliegt. Dabei greift der Spreizmechanismus 30 in den inneren Hohlraum 17 des Aufweitungsabschnitts 16 ein, wie in den Fig. 6 und Fig. 7 zu sehen ist. Die Achse Z der Werkzeugaufnahme 20 und die Längsachse L des Zerspanungswerkzeugs 10 liegen in diesem Zustand koaxial zueinander.

Zunächst befindet sich das Werkzeugsystem 100 in dem in den Fig. 6 und Fig. 7 dargestellten ungespannten Zustand. Durch Eingreifen des Betätigungsschlüssels für den Spreizmechanismus 30 durch die Durchbrechungen 26 in dem umlaufenden Vorsprung 24 der Werkzeugaufnahme 20 und durch die Durchbrüche 50 in dem Aufweitungsabschnitt 16 kann der Spreizmechanismus 30 betätigt werden und von dem in Fig. 7 gezeigten ungespannten Zustand in den in Fig. 8 gezeigten gespannten Zustand übergeführt werden. Wie in Fig. 8 zu sehen ist, werden die Spannelemente 31 des Spreizmechanismus 30 nach radial außen bewegt und drücken gegen schräg zur Längsachse ausgerichtete Flanken in dem inneren Hohlraum 17 des Aufweitungsabschnitts 16. Die resultierenden Kräfte F sind in Fig. 8 schematisch durch Pfeile dargestellt. Die Kraft F hat eine in Axialrichtung wirkende Komponente, die den Axialanschlag 15 des Zerspanungswerkzeugs 10 gegen die Axialanlagefläche 25 der Werkzeugaufnahme 20 spannt. Ferner drückt der Spreizmechanismus 30 an zueinander gegenüberliegenden Bereichen (oben und unten in Fig. 8) nach radial außen gegen die Wand des Aufweitungsabschnitts 16, sodass der Aufweitungsabschnitt 16 elastisch aufgeweitet wird. Die erste Art von rückspringenden Vertiefungen 19a, 19a' ist am Außenumfang des Aufweitungsabschnitts 16 an den Stellen ausgebildet, an denen die Krafteinwirkung des Spreizmechanismus 30 nach radial außen erfolgt.

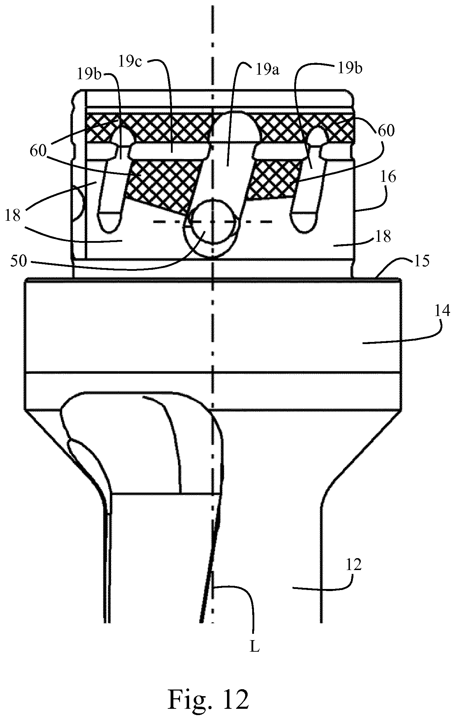

In den Fig. 10, Fig. 11 und Fig. 12 sind die Bereiche des Zerspanungswerkzeugs 10, auf die sich die durch den Spreizmechanismus verursachten wirkenden Klemmkräfte verteilen, schematisch durch Schraffuren dargestellt. In Fig. 10 ist zu sehen, dass im Wesentlichen der gesamte Axialanschlag 15 als axiale Anlagefläche wirkt, die an der Flächenpressung zwischen dem vorspringenden Bund 14 und dem umlaufenden Vorsprung 24 der Werkzeugaufnahme 20 teilnimmt. In Fig. 11 und dem vergrößerten Detail in Fig. 12 ist ferner zu erkennen, dass relativ große Bereiche der Klemmflächen 18 als Umfangsanlageflächen 60 wirken, die tatsächlich an der Flächenpressung zwischen dem Außenumfang des Aufweitungsabschnitts 16 und der Bohrung 23 der Werkzeugaufnahme 20 teilnehmen.

Durch die gezielte Unterbrechung der Klemmflächen 18 mit den rückspringenden Vertiefungen 19a, 19a', 19b 19c, 19d ist die resultierende Flächenpressung zwischen den Klemmflächen 18 und der Bohrung 23 der Werkzeugaufnahme 20 signifikant gleichmäßiger über den Umfang des Aufweitungsabschnitts 16 verteilt als dies bei über den Umfang des Aufweitungsabschnitts 16 ununterbrochen umlaufenden Klemmflächen der Fall wäre. Insbesondere die Anordnung der ersten Art von Klemmflächen 19a, 19a' in den Bereichen, in denen der Spreizmechanismus 30 nach radial außen wirkt, hat zur Folge, dass die wirksamen Umfangsanlageflächen 60 auch mehr in der Richtung senkrecht zur Krafteinleitung durch den Spreizmechanismus 30 und senkrecht zur Längsachse L verteilt sind. In dieser Weise werden extrem hohe Flächenpressungen mit damit einhergehendem erhöhten Verschleiß und dem Risiko von lokalen Verschweißungen signifikant reduziert.

## Patentansprüche

1. Werkzeugsystem (100) mit einem Zerspanungswerkzeug (10) und einer Werkzeugaufnahme (20),
wobei das Zerspanungswerkzeug (10) hat:
einen entlang einer Längsachse (L) ausgebildeten Grundkörper (11), der einen als Zerspanungsabschnitt ausgebildeten Schaftabschnitt (12) an einem ersten Ende und einen einstückig mit diesem ausgebildeten Aufnahmeabschnitt (13) zur Aufnahme an einer Werkzeugaufnahme (20) an einem zweiten Ende aufweist,
wobei der Aufnahmeabschnitt (13) einen in Radialrichtung vorspringenden Bund (14), der einen quer zur Längsachse (L) verlaufenden Axialanschlag (15) bildet, und einen als Hohlzapfen ausgebildeten, elastisch aufweitbaren Aufweitungsabschnitt (16) aufweist, der einen in Richtung des zweiten Endes offenen inneren Hohlraum (17) hat,
wobei die Außenumfangsfläche des Aufweitungsabschnittes (16) eine Mehrzahl von separaten Klemmflächen (18) aufweist, die entlang der Oberfläche eines gemeinsamen zu der Längsachse koaxialen Zylinders oder Konus verlaufen und die durch rückspringende Vertiefungen (19a, 19a', 19b, 19c, 19d) zumindest in Umfangsrichtung voneinander getrennt sind;
wobei die Werkzeugaufnahme (20) eine Bohrung (23) zur Aufnahme des Hohlzapfens des Aufnahmeabschnitts (16) und eine Axialanlagefläche (25) zur Anlage des vorspringenden Bundes (14) aufweist,
**dadurch gekennzeichnet, dass** die Werkzeugaufnahme (20) einen in den inneren Hohlraum (17) des Aufweitungsabschnitts (16) eingreifenden Spreizmechanismus (30) zur radialen Aufweitung des Aufweitungsabschnitts (16) aufweist, wobei der Spreizmechanismus (30) in einer ersten Richtung an bezüglich der Längsachse (L) gegenüberliegenden Bereichen gegen die Wand des Aufweitungsabschnitts (16) nach radial außen drückt und in diesen gegenüberliegenden Bereichen jeweils rückspringende Vertiefungen (19a, 19a') ausgebildet sind, die Klemmflächen (18) voneinander in Umfangsrichtung trennen.

2. Werkzeugsystem nach Anspruch 1, wobei eine erste rückspringende Vertiefung (19a), die Klemmflächen (18) in Umfangsrichtung voneinander trennt, und eine zweite rückspringende Vertiefung (19a'), die Klemmflächen (18) in Umfangsrichtung voneinander trennt, auf zueinander gegenüberliegenden Seiten der Längsachse (L) ausgebildet sind.

3. Werkzeugsystem nach Anspruch 1 oder 2, wobei die Klemmflächen (18) auch in Axialrichtung durch rückspringende Vertiefungen (19c) voneinander getrennt sind.

4. Werkzeugsystem nach einem der vorangehenden Ansprüche, wobei zumindest eine erste Art von rückspringenden Vertiefungen (19a, 19a') und eine von der ersten Art verschiedene zweite Art von rückspringenden Vertiefungen (19b) ausgebildet sind.

5. Werkzeugsystem nach Anspruch 4, wobei sich die erste Art von rückspringenden Vertiefungen (19a, 19a') und die zweite Art von rückspringenden Vertiefungen (19b) in ihrer axialen Erstreckung bezüglich der Längsachse (L) voneinander unterscheiden.

6. Werkzeugsystem nach Anspruch 4 oder 5, wobei sich die erste Art von rückspringenden Vertiefungen (19a, 19a') und die zweite Art von rückspringenden Vertiefungen (19b) in ihrer Tiefe und/oder Flächenerstreckung in der Außenumfangsfläche voneinander unterscheiden.

7. Werkzeugsystem nach einem der vorangehenden Ansprüche, wobei der Aufweitungsabschnitt (16) als ungeschlitzter Hohlzapfen ausgebildet ist.

8. Werkzeugsystem nach einem der vorangehenden Ansprüche, wobei die Klemmflächen (18) entlang der Oberfläche eines gemeinsamen zu der Längsachse (L) koaxialen Zylinders verlaufen.

9. Werkzeugsystem nach einem der vorangehenden Ansprüche, wobei an dem Schaftabschnitt (12) zumindest ein Sitz zur Aufnahme eines auswechselbaren Schneideinsatzes (40) ausgebildet ist.

10. Werkzeugsystem nach einem der vorangehenden Ansprüche, wobei die rückspringenden Vertiefungen (19a, 19a', 19b, 19c, 19d) derart ungleichmäßig über den Umfang des Aufweitungsabschnitts (16) verteilt sind, dass die resultierende Flächenpressung zwischen den Klemmflächen (18) und der Bohrung (23) der Werkzeugaufnahme (20) gegenüber einer in Umfangsrichtung ungeteilten Klemmfläche gleichmäßiger über den Umfang des Aufweitungsabschnitts (16) verteilt ist.

11. Werkzeugsystem nach einem der vorangehenden Ansprüche, wobei der Spreizmechanismus (30) auch für einen axialen Einzug des vorspringenden Bundes (14) gegen die Axialanlagefläche (25) ausgebildet ist.

## Claims

1. Tool system (100) having a machining tool (10) and a tool receptacle (20),
wherein the machining tool (10) has:
a main body (11) which is configured along a longitudinal axis (L) and on a first end has a shank portion (12) configured as a cutting portion, and on a second end has a receptacle portion (13) for being received on a tool receptacle (20), said receptacle portion (13) being configured so as to be in one piece with said shank portion (12);
wherein the receptacle portion (13) has a collar (14) which projects in the radial direction and forms an axial abutment(15) that runs transversely to the longitudinal axis (L), and an elastically enlargeable widening portion (16) which is configured as a hollow shank and has an inner cavity (17) that is open in the direction of the second end;
wherein the external circumferential face of the widening portion (16) has a plurality of separate clamping faces (18) which run along the surface of a cylinder or cone that is coaxial with the longitudinal axis and at least in the circumferential direction are mutually separated by recessed depressions (19a, 19a', 19b, 19c, 19d);
wherein the tool receptacle (20) has a bore (23) for receiving the hollow shank of the receptacle portion (16), and an axial bearing face (25) for bearing the projecting collar (14),
**characterized in that**
the tool receptacle (20) has an expansion mechanism (30) which for radially widening the widening portion (16) engages in the inner cavity (17) of the widening portion (16), wherein the expansion mechanism (30), on regions that are mutually opposite in relation to the longitudinal axis (L), in a first direction pushes in a radially outward manner against the wall of the widening portion (16), and recessed depressions (19a, 19a') that mutually separate the clamping faces (18) in the circumferential direction are in each case configured in these mutually opposite regions.

2. Tool system according to Claim 1, wherein a first recessed depression (19a) that mutually separates clamping faces (18) in the circumferential direction, and a second recessed depression (19a') that mutually separates clamping faces (18) in the circumferential direction, are configured on mutually opposite sides of the longitudinal axis (L) .

3. Tool system according to Claim 1 or 2, wherein the clamping faces (18) are mutually separated by recessed depressions (19c) also in the axial direction.

4. Tool system according to one of the preceding claims, wherein at least one first type of recessed depressions (19a, 19a') and one second type, different from the first type, of recessed depressions (19b) are configured.

5. Tool system according to Claim 4, wherein the first type of recessed depressions (19a, 19a') and the second type of recessed depressions (19b) differ from one another in terms of the axial extent thereof in relation to the longitudinal axis (L).

6. Tool system according to Claim 4 or 5, wherein the first type of recessed depressions (19a, 19a') and the second type of recessed depressions (19b) differ from one another in terms of the depth thereof and/or extent of area thereof in the external circumferential face.

7. Tool system according to one of the preceding claims, wherein the widening portion (16) is configured as a non-slotted hollow shank.

8. Tool system according to one of the preceding claims, wherein the clamping faces (18) run along the surface of a common cylinder which is coaxial with the longitudinal axis (L).

9. Tool system according to one of the preceding claims, wherein at least one seat for receiving an exchangeable cutting insert (40) is configured on the shank portion (12).

10. Tool system according to one of the preceding claims, wherein the recessed depressions (19a, 19a', 19b, 19c, 19d) are non-uniformly distributed across the circumference of the widening portion (16) in such a manner that the resulting contact pressure per unit area between the clamping faces (18) and the bore (23) of the tool receptacle (20), in comparison to a clamping face not divided in the circumferential direction, is more uniformly distributed across the circumference of the widening portion (16).

11. Tool system according to one of the preceding claims, wherein the expansion mechanism (30) is also configured for an axial pulling of the projecting collar (14) against the axial bearing face (25).

## Revendications

1. Système d'outil (100) comprenant un outil d'enlèvement de copeaux (10) et un réceptacle d'outil (20) ,
l'outil d'enlèvement de copeaux (10) ayant :
un corps de base (11) formé le long d'un axe longitudinal (L), qui présente une section de tige (12) configurée en tant que section d'enlèvement de copeaux à une première extrémité et une section de réception (13) configurée d'un seul tenant avec celle-ci pour la réception sur un réceptacle d'outil (20) à une deuxième extrémité,
la section de réception (13) présentant un collet (14) faisant saillie dans la direction radiale, qui forme une butée axiale (15) s'étendant transversalement à l'axe longitudinal (L), et une section d'élargissement (16) configurée en tant que tenon creux, élargissable élastiquement, qui a une cavité intérieure (17) ouverte en direction de la deuxième extrémité,
la surface périphérique extérieure de la section d'élargissement (16) présentant une pluralité de surfaces de serrage séparées (18), qui s'étendent le long de la surface d'un cylindre ou d'un cône commun coaxial à l'axe longitudinal et qui sont séparées les unes des autres au moins dans la direction périphérique par des creux à retour (19a, 19a', 19b, 19c, 19d) ;
le réceptacle d'outil (20) présentant un alésage (23) pour la réception du tenon creux de la section de réception (16) et une surface d'appui axiale (25) pour l'appui du collet faisant saillie (14),
**caractérisé en ce que** le réceptacle d'outil (20) présente un mécanisme d'écartement (30) s'engageant dans la cavité intérieure (17) de la section d'élargissement (16) pour l'élargissement radial de la section d'élargissement (16), le mécanisme d'écartement (30) exerçant dans une première direction une pression radiale vers l'extérieur contre la paroi de la section d'élargissement (16) dans des zones opposées par rapport à l'axe longitudinal (L), et des creux à retour (19a, 19a') étant respectivement formés dans ces zones opposées, qui séparent des surfaces de serrage (18) les unes des autres dans la direction périphérique.

2. Système d'outil selon la revendication 1, dans lequel un premier creux à retour (19a), qui sépare des surfaces de serrage (18) les unes des autres dans la direction périphérique, et un deuxième creux à retour (19a'), qui sépare des surfaces de serrage (18) les unes des autres dans la direction périphérique, sont formés sur des côtés opposés l'un à l'autre de l'axe longitudinal (L).

3. Système d'outil selon la revendication 1 ou 2, dans lequel les surfaces de serrage (18) sont également séparées les unes des autres dans la direction axiale par des creux à retour (19c).

4. Système d'outil selon l'une quelconque des revendications précédentes, dans lequel au moins un premier type de creux à retour (19a, 19a') et un deuxième type de creux à retour (19b), différent du premier type, sont formés.

5. Système d'outil selon la revendication 4, dans lequel le premier type de creux à retour (19a, 19a') et le deuxième type de creux à retour (19b) diffèrent l'un de l'autre par leur extension axiale par rapport à l'axe longitudinal (L).

6. Système d'outil selon la revendication 4 ou 5, dans lequel le premier type de creux à retour (19a, 19a') et le deuxième type de creux à retour (19b) diffèrent l'un de l'autre par leur profondeur et/ou leur étendue de surface dans la surface périphérique extérieure.

7. Système d'outil selon l'une quelconque des revendications précédentes, dans lequel la section d'élargissement (16) est configurée en tant que tenon creux non fendu.

8. Système d'outil selon l'une quelconque des revendications précédentes, dans lequel les surfaces de serrage (18) s'étendent le long de la surface d'un cylindre commun coaxial à l'axe longitudinal (L).

9. Système d'outil selon l'une quelconque des revendications précédentes, dans lequel au moins un siège pour la réception d'un insert de coupe interchangeable (40) est formé sur la section de tige (12) .

10. Système d'outil selon l'une quelconque des revendications précédentes, dans lequel les creux à retour (19a, 19a', 19b, 19c, 19d) sont répartis de manière non uniforme sur la périphérie de la section d'élargissement (16), de telle sorte que la pression de surface résultante entre les surfaces de serrage (18) et l'alésage (23) du réceptacle d'outil (20) est répartie de manière plus uniforme sur la périphérie de la section d'élargissement (16) par rapport à une surface de serrage non divisée dans la direction périphérique.

11. Système d'outil selon l'une quelconque des revendications précédentes, dans lequel le mécanisme d'écartement (30) est également configuré pour un retrait axial du collet faisant saillie (14) contre la surface d'appui axiale (25).
